# EUROPEAN PATENT APPLICATION

(11) **EP 4 458 662 A1**
(43) Date of publication of application: **06.11.2024**
(21) Application number: 24169836.4
(22) Date of filing: 12.04.2024
(51) Int. Cl.: B63H 20/10

(54) **PROPULSION SYSTEM FOR A MARINE VESSEL**

(30) Priority: 14.04.2023 SE 2350444
(71) Applicant: Volvo Penta Corporation, 405 08 Göteborg (SE)
(72) Inventor: BRASK, Jonas, 517 95 Olsfors (SE)
(74) Representative: Ström & Gulliksson AB

(57) **Abstract**

The disclosure relates to a propulsion system for a marine vessel, comprising a transom bracket being configured to be connected with a transom of the marine vessel, and a drive unit, the drive unit is rotatably connected with the transom bracket via a first pivot joint, wherein a harness is guided from the transom bracket via the first pivot joint to the drive unit.

## Description

### TECHNICAL FIELD

The disclosure relates generally to a propulsion system. In particular aspects, the disclosure relates to a propulsion system for a marine vessel. The disclosure can be applied to marine vessels, such as water crafts, motorboats, work boats, sport vessels, boats, ships, among other vessel types. Although the disclosure may be described with respect to a particular marine vessel, the disclosure is not restricted to any particular marine vessel.

### BACKGROUND

Propulsion systems for marine vessels are known. These propulsions systems are becoming more and more complex with a need for guiding different harnesses from the marine vessel to the propulsion system and back. Furthermore, since the propulsion system may be movable in relation to the marine vessel it may be difficult to guide the harnesses without the risk for there are being damaged by the moving parts of the propulsion system.

### SUMMARY

According to a first aspect of the disclosure, a propulsion system for a marine vessel, comprising a transom bracket being configured to be connected with a transom of the marine vessel, and a drive unit, the drive unit is rotatably connected with the transom bracket via a first pivot j oint, wherein a harness is guided from the transom bracket via the first pivot joint to the drive unit. The first aspect of the disclosure may seek to solve the disadvantages with guiding the harness from the drive unit to the vessel or from the vessel to the drive unit. A technical benefit may include to guide the harness via the first pivot joint whereby the harness may be protected and thereby the risk for damage is minimized.

Optionally in some examples, including in at least one preferred example, a connecting arm is arranged between the transom bracket and the drive unit. A technical benefit may include providing movement freedom to the drive unit in relation to the transom bracket.

Optionally in some examples, including in at least one preferred example, the connecting arm being connected with the transom bracket via the first pivot joint and the drive unit is connected with the connecting arm via a second pivot joint. A technical benefit may include providing movement freedom to the drive unit in relation to the transom bracket.

Optionally in some examples, including in at least one preferred example, the harness is guided from first pivot joint, along the connecting arm and via the second pivot joint to the drive unit. A technical benefit may include that the harness is guided via the first pivot j oint along the connecting arm and via the second pivot j oint whereby the harness may be protected and thereby the risk for damage is minimized.

Optionally in some examples, including in at least one preferred example, the first pivot joint is arranged at a first end of the connecting arm and the second pivot joint is connected at a second end of the connecting arm. A technical benefit may include providing movement freedom to the drive unit in relation to the transom bracket.

Optionally in some examples, including in at least one preferred example, the connecting arm is hollow to define an internal space, the harness is configured to be guided in the internal space along the connecting arm. A technical benefit may include that the harness may be protected and thereby the risk for damage is minimized long the connecting arm.

Optionally in some examples, including in at least one preferred example, the harness is guided from the marine vessel through the transom of the marine vessel to the first pivot joint via the transom bracket. A technical benefit may include that the harness may be protected and thereby the risk for damage is minimized from the marine vessel to the first pivot joint.

Optionally in some examples, including in at least one preferred example, the transom bracket comprises a bracket cover protecting an interior of the transom bracket. A technical benefit may include that the first pivot joint is protected from the environments and for unauthorized persons tampers with the first pivot j oint. Additionally, it provide a streamlined and appealing design to the propulsion system.

Optionally in some examples, including in at least one preferred example, the harness is guided in the interior. A technical benefit may include that the harness is protected from the marine vessel to the drive unit and vice versa without any harness protruding from the different components.

Optionally in some examples, including in at least one preferred example, a plurality of harnesses is guided from the transom bracket to the drive unit. A technical benefit may include that several units onboard the marine vessel may be connected to the drive unit.

Optionally in some examples, including in at least one preferred example, one or more sealing elements are arranged around the harness(es) at the pivot j oint(s) and/or at the transom where the harness(es) is/are led through the transom, and/or at the transom bracket where the harness(es) is/are led through or into the transom bracket. A technical benefit may include ensuring that the interior of the marine vessel, the transom bracket, the pivot joints and/or the connecting arm is/are sealed off for minimizing moisture and water enter into the interior.

Optionally in some examples, including in at least one preferred example, the harness is an electrical line, a fluid line, or any combination thereof. A technical benefit may include connecting the drive unit with different supply or control lines depending of the drive unit type.

Optionally in some examples, including in at least one preferred example, the fluid line is configured to lead a cooling medium, a lubricant, a hydraulic fluid, or a fuel to the drive unit or from the drive unit. A technical benefit may include in an expedient manner to provide supply of fluid to the drive unit.

Optionally in some examples, including in at least one preferred example, the electrical line comprises a power cable or a control line. A technical benefit may include in an expedient manner to provide supply electric power and/or control signals to the drive unit.

Optionally in some examples, including in at least one preferred example, the harness is connecting at least one unit arranged in the marine vessel with the drive unit.

Optionally in some examples, including in at least one preferred example, the unit is a cooling medium tank, a power supply, an energy source, a fuel tank, a hydraulic fluid tank, a control unit, or any combination thereof.

Optionally in some examples, including in at least one preferred example, the drive unit comprises an electric motor. A technical benefit may include to provide an environmental and sustainable power solution to drive unit while minimizing noise from the motor.

Optionally in some examples, including in at least one preferred example, the drive unit is configured to be trimmed and/or titled around the first pivot joint and/or the second pivot j oint. A technical benefit may include providing movement freedom to the drive unit in relation to the transom bracket.

Optionally in some examples, including in at least one preferred example, a trim arrangement is arranged between the transom bracket and the drive unit or between the connecting arm and the drive unit. A technical benefit may include providing movement freedom to the drive unit in relation to the transom bracket and to facilitate positioning the drive unit in different trim angles.

Optionally in some examples, including in at least one preferred example, a motor is arranged in connection with the first pivot joint, and/or an additional motor is arranged in connection with the second pivot joint. A technical benefit may include providing movement freedom to the drive unit in relation to the transom bracket.

According to a second aspect of the disclosure, a marine vessel comprising a transom and a propulsion system as described above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary of a propulsion system seen in a side view according to an example.
**FIG. 2** is the exemplary of the propulsion system of **FIG. 1** seen in a top view.
**FIG. 3** is another exemplary of a propulsion system seen in a side view according to an example.
**FIG. 4** is the exemplary of the propulsion system of **FIG. 3** seen in a top view.
**FIG. 5** is another exemplary of a propulsion system.

### DETAILED DESCRIPTION

The detailed description set forth below provides information and examples of the disclosed technology with sufficient detail to enable those skilled in the art to practice the disclosure.

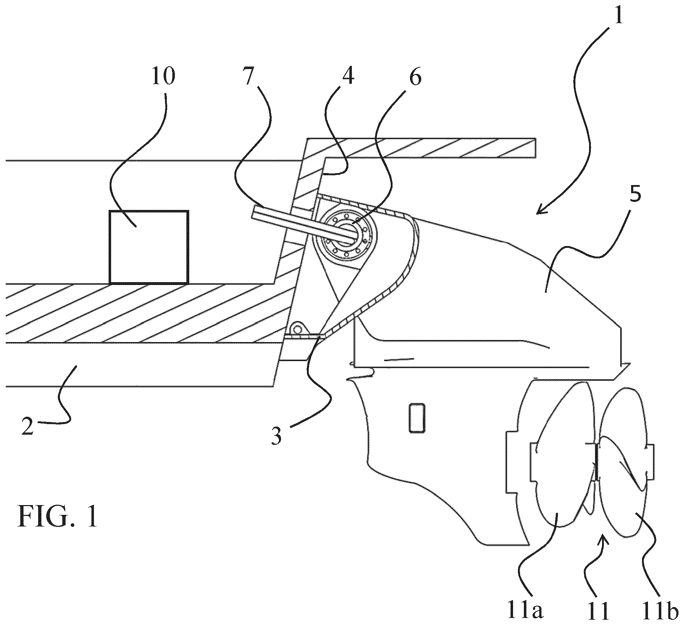

**FIG.1** shows a propulsion system 1 for a marine vessel 2, comprising a transom bracket 3 being configured to be connected with a transom 4 of the marine vessel 2, and a drive unit 5, the drive unit 5 is rotatably connected with the transom bracket 3 via a first pivot joint 6. According to the disclosure a harness 7 is guided from the transom bracket 3 via the first pivot joint 6 to the drive unit 5. Hereby is obtained that the harness 7 is guided via the first pivot joint 6 whereby the harness 7 may be protected and thereby the risk for damage is minimized.

The harness 7 is connecting at least one unit 10 arranged in the marine vessel 2 with the drive unit 5. The unit 10 may be a cooling medium tank, a power supply, an energy source, a fuel tank, a hydraulic fluid tank, a control unit, or any combination thereof.

In **FIG. 1**, two harnesses 7 are shown. However, a plurality of harnesses 7 may be guided from the transom bracket 3 to the drive unit 5 depending on the demand.

The harness 7 may be an electrical line, a fluid line, or any combination thereof. In the circumstance, the harness is a fluid line it may be configured to lead a cooling medium, a lubricant, a hydraulic fluid, or a fuel to the drive unit or from the drive unit. In other circumstances where the harness is the electrical line, it may comprise a power cable or a control line.

The harness 7 may be partly or fully made of a bendable material thereby facilitating that it may be guided through the transom bracket 3 and the first pivot joint 6.

The drive unit 5 may comprise an electric motor. In another example, the drive unit may comprise a combustion engine.

Furthermore, the drive unit 5 may comprise one or more propellers 11. The one or more propellers 11 are in **FIG. 1** configured to push the marine vessel in a forward motion of the marine vessel 2. In another example, the one or more propellers 11 may be configured to pull the marine vessel in a forward motion of the marine vessel.

In **FIG. 1**, the drive unit 5 comprises a first propeller 11a and a second propeller 11b. The first propeller 11a may be arranged to be counter-rotating compared to the second propeller 11b.

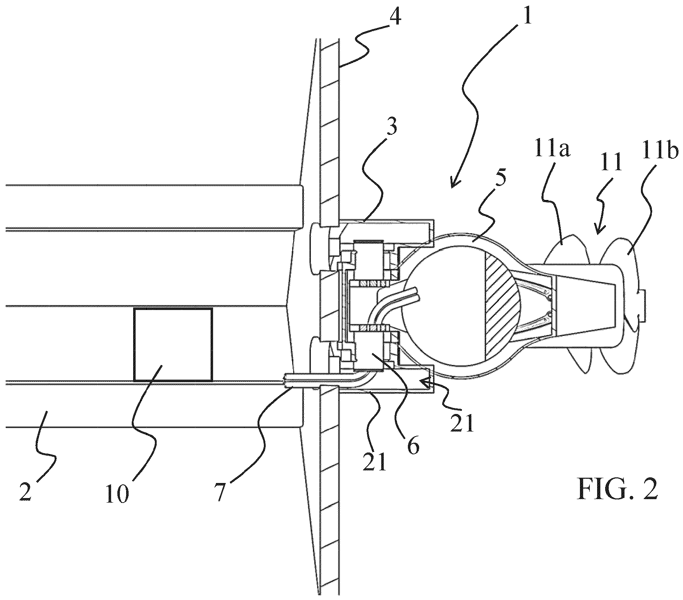

In **FIG. 2**, the propulsion system 1 of **FIG. 1** is shown in a top view. The transom bracket 3 may comprise a bracket cover 20 protecting an interior 21 of the transom bracket 3. In **FIG. 2**, the harnesses 7 are guided from the marine vessel 2 through the transom 4 into the interior 21 of the transom bracket 3. In the example, the interior 21 is arranged on an outside of the first pivot joint 6 whereby the harnesses are guided through the first pivot joint 6 from the outside and therefrom to the center of the drive unit 5. Hereby the harnesses 7 are protected all the way from the marine vessel 2 to the drive unit 5 or vice versa.

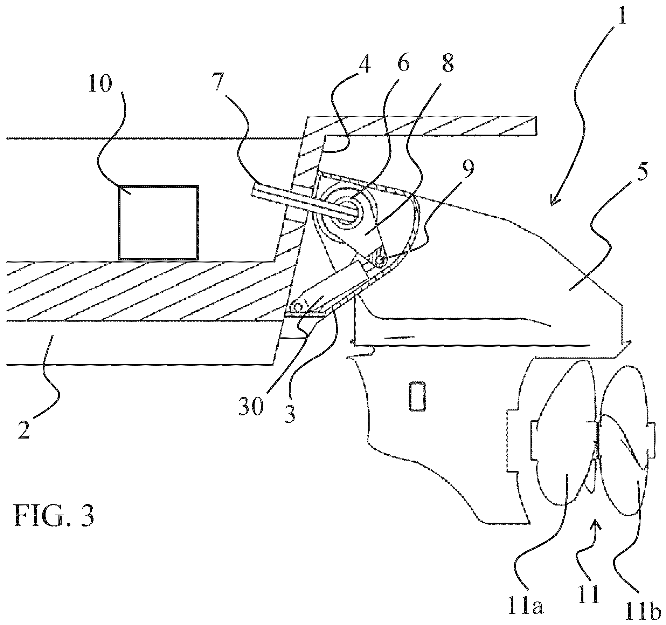

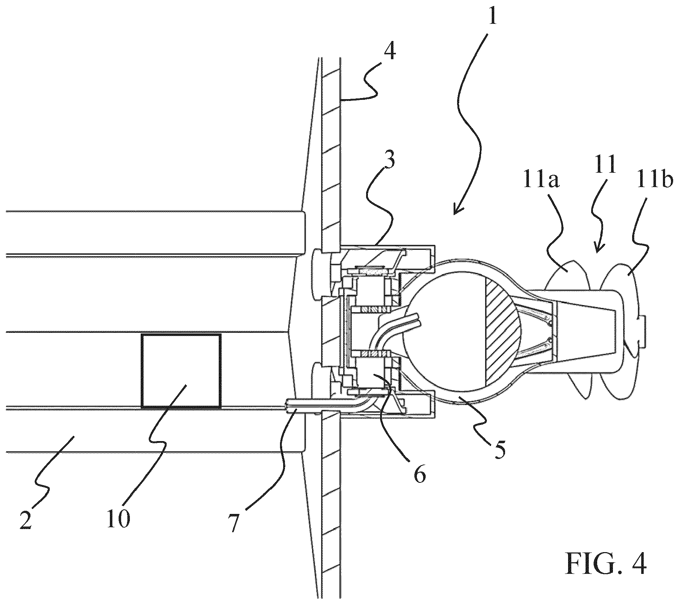

In **FIGS. 3-4**, another example is shown in a side view. A connecting arm 8 is arranged between the transom bracket 3 and the drive unit 5. The connecting arm 8 being connected with the transom bracket via the first pivot joint 6 and the drive unit is connected with the connecting arm via a second pivot joint 9. The drive unit 5 may be configured to be trimmed and/or titled around the first pivot joint 6 and/or the second pivot joint 9. A trim arrangement may be arranged between the transom bracket 3 and the drive unit 5, or between the connecting arm 8 and the drive unit 5. The trim arrangement may comprise one or more trim cylinders 30 such as a linear actuator 30. In another example a rotation motor may be arranged in connection with the first pivot joint, and/or an additional rotation motor is arranged in connection with the second pivot joint. The trim arrangement may also be a combination of linear actuators 30 and a rotation motor.

Furthermore, the harness 7 may be guided from first pivot joint, along the connecting arm 8 and via the second pivot joint 9 to the drive unit 5. The first pivot joint 6 is arranged at a first end of the connecting arm 8 and the second pivot joint 9 is connected at a second end of the connecting arm.

In an example, the connecting arm 8 is hollow to define an internal space, the harness is configured to be guided in the internal space along the connecting arm whereby the harness is protected.

One or more sealing elements may be arranged around the harness(es) at the pivot joint(s) and/or at the transom where the harness(es) is/are led through the transom, and/or at the transom bracket where the harness(es) is/are led through or into the transom bracket.

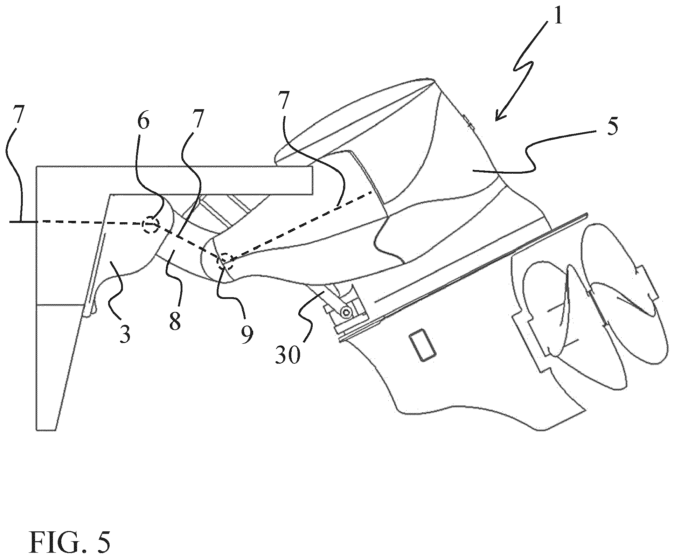

**FIG. 5** shows another example of a propulsion system according to the disclosure. The propulsion system 1 comprises a transom bracket 3 configured to be connected with a transom of the marine vessel and a drive unit 5. The drive unit 5 is arranged to be moved in relation to the transom bracket 3 for moving the drive unit 5 in the water and out of the water. The drive unit 5 is connected with the transom bracket 3 via a connecting arm 8 having a first pivot j oint 6 connected with the transom bracket 3 and a second pivot j oint 9 connected with the drive unit 5. The drive unit 5 is configured to be moved in the water and out of the water by the connecting arm 8 pivots around the first pivot joint 6 or the drive unit 5 pivots around the second pivot joint 9 or the connecting arm 8 and the drive unit 5 pivot around both pivot joints 6, 9. The first pivot joint 6 and the second pivot j oint 9 are hollow so that the harness 7 can be guided from the marine vessel through the interior of the transom bracket 3, via the first pivot j oint 6, inside the connecting arm 8, via the second pivot j oint 9 to the drive unit 5, or vice versa. The routing of the harness 7 is shown in a dotted line since it is guided inside the different components. It is hereby obtained that the harness is secured and protected so that the risk for damage and influences from the environment is minimized. Furthermore, the risk for the harness is tampered with is minimized. It is also possible to have a streamlined design of the propulsion system without any harnesses being visible from the outside.

The drive unit 5 may be moved in the water by either pivoting around the first pivot joint and/or the second pivot joint 9. This may be performed by one or more linear actuators 30 or a rotation actuator, or any combination thereof.

The disclosure also relates to a marine vessel 2 comprising a transom 4 and a propulsion system 1 as described above.

Certain aspects and variants of the disclosure are set forth in the following examples numbered consecutive below.

Example 1: A propulsion system (1) for a marine vessel (2), comprising
a transom bracket (3) being configured to be connected with a transom (4) of the marine vessel, and
a drive unit (5), the drive unit (5) is rotatably connected with the transom bracket (3) via a first pivot joint (6),
wherein a harness (7) is guided from the transom bracket (3) via the first pivot joint (6) to the drive unit (5).

Example 2: The propulsion system (1) of example 1, wherein a connecting arm (8) is arranged between the transom bracket (3) and the drive unit (5).

Example 3: The propulsion system (1) of example 2, wherein the connecting arm (8) being connected with the transom bracket via the first pivot joint (6) and the drive unit is connected with the connecting arm via a second pivot joint (9).

Example 4: The propulsion system (1) of example 3, wherein the harness (7) is guided from first pivot joint, along the connecting arm and via the second pivot joint to the drive unit.

Example 5: The propulsion system (1) of example 3, wherein the first pivot joint is arranged at a first end of the connecting arm and the second pivot j oint is connected at a second end of the connecting arm.

Example 6: The propulsion system (1) of any of examples 2-5, wherein the connecting arm (8) is hollow to define an internal space, the harness is configured to be guided in the internal space along the connecting arm.

Example 7: The propulsion system (1) of any of the preceding examples, wherein the harness (7) is guided from the marine vessel (2) through the transom (4) of the marine vessel to the first pivot joint (6) via the transom bracket.

Example 8: The propulsion system (1) of any of the preceding examples, wherein a plurality of harnesses (7) is guided from the transom bracket (3) to the drive unit (5).

Example 9: The propulsion system (1) of any of the preceding examples, wherein one or more sealing elements are arranged around the harness(es) at the pivot j oint(s) and/or at the transom where the harness(es) is/are led through the transom, and/or at the transom bracket where the harness(es) is/are led through or into the transom bracket.

Example 10: The propulsion system (1) of any of the preceding examples, wherein the harness (7) is an electrical line, a fluid line, or any combination thereof.

Example 11: The propulsion system (1) of example 10, wherein the fluid line is configured to lead a cooling medium, a lubricant, a hydraulic fluid, or a fuel to the drive unit or from the drive unit.

Example 12: The propulsion system (1) of example 10, wherein the electrical line comprises a power cable or a control line.

Example 13: The propulsion system (1) of any of the preceding examples, wherein the harness (7) is partly or fully made of a bendable material.

Example 14: The propulsion system (1) of any of the preceding examples, wherein the harness (7) is connecting at least one unit (10) arranged in the marine vessel with the drive unit.

Example 15: The propulsion system (1) of example 14, wherein the unit is a cooling medium tank, a power supply, an energy source, a fuel tank, a hydraulic fluid tank, a control unit, or any combination thereof.

Example 16: The propulsion system (1) of any of the preceding examples, wherein the drive unit (5) comprises an electric motor.

Example 17: The propulsion system (1) of any of the preceding examples, wherein the drive unit (5) is configured to be trimmed and/or titled around the first pivot joint (6) and/or the second pivot joint (9).

Example 18: The propulsion system (1) of example 17, wherein a trim arrangement is arranged between the transom bracket and the drive unit.

Example 19: The propulsion system (1) of example 18, wherein the trim arrangement comprises one or more trim cylinders.

Example 20: The propulsion system (1) of any of the preceding examples, wherein a motor is arranged in connection with the first pivot joint, and/or an additional motor is arranged in connection with the second pivot joint.

Example 21: The propulsion system (1) of any of the preceding examples, wherein the drive unit (5) comprises one or more propellers (11).

Example 22: The propulsion system (1) of example 21, wherein the one or more propellers (11) are configured to push the marine vessel in a forward motion of the marine vessel.

Example 23: The propulsion system (1) of example 21, wherein the one or more propellers (11) are configured to pull the marine vessel in a forward motion of the marine vessel.

Example 24: The propulsion system (1) of example 21, wherein the drive unit (5) comprises a first propeller (11a) and a second propeller (11b).

Example 25: The propulsion system (1) of example 24, wherein the first propeller (11a) is arranged to be counter-rotating compared to the second propeller (11b).

Example 26: The propulsion system (1) of any of the preceding examples, wherein the transom bracket comprises a bracket cover (20) protecting an interior (21) of the transom bracket (3).

Example 27: The propulsion system (1) of example 26, wherein the harness is guided in the interior (21).

Example 28: The propulsion system (1) of any of the preceding examples, wherein the harness is guided through the transom to the first pivot joint via an outside of the transom bracket.

Example 29: The propulsion system (1) of any of the examples 1-28, wherein the first pivot joint and/or the second pivot joint are hollow.

Example 30: The propulsion system (1) of any of the examples 1-29, wherein a guide tube is arranged from the marine vessel, through the transom bracket, via the first pivot joint to the drive unit, or is arranged from the marine vessel, through the transom bracket, via the first pivot j oint , through the connecting arm, via the second pivot j oint to the drive unit.

Example 31: The propulsion system (1) of example 30, wherein the guide tube is configured to assist in guiding a new harness, or if the system should be retrofitted.

Example 32: A marine vessel (2) comprising a transom (4) and a propulsion system (1) of any of the examples 1-31.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A propulsion system (1) for a marine vessel (2), comprising
a transom bracket (3) being configured to be connected with a transom (4) of the marine vessel, and
a drive unit (5), the drive unit (5) is rotatably connected with the transom bracket (3) via a first pivot joint (6),
wherein a harness (7) is guided from the transom bracket (3) via the first pivot joint (6) to the drive unit (5).

2. The propulsion system (1) of claim 1, wherein a connecting arm (8) is arranged between the transom bracket (3) and the drive unit (5).

3. The propulsion system (1) of claim 2, wherein the connecting arm (8) being connected with the transom bracket via the first pivot joint (6) and the drive unit is connected with the connecting arm via a second pivot joint (9).

4. The propulsion system (1) of claim 3, wherein the harness (7) is guided from first pivot j oint, along the connecting arm (8) and via the second pivot j oint (9) to the drive unit (5).

5. The propulsion system (1) of claim 3, wherein the first pivot joint is arranged at a first end of the connecting arm and the second pivot joint is connected at a second end of the connecting arm.

6. The propulsion system (1) of any of claims 2-5, wherein the connecting arm (8) is hollow to define an internal space, the harness is configured to be guided in the internal space along the connecting arm.

7. The propulsion system (1) of any of the preceding claims, wherein the harness (7) is guided from the marine vessel (2) through the transom (4) of the marine vessel to the first pivot joint (6) via the transom bracket.

8. The propulsion system (1) of any of the claims 1-7, wherein the transom bracket comprises a bracket cover (20) protecting an interior (21) of the transom bracket (3).

9. The propulsion system (1) of claim 8, wherein the harness is guided in the interior (21).

10. The propulsion system (1) of any of the preceding claims, wherein a plurality of harnesses (7) is guided from the transom bracket (3) to the drive unit (5).

11. The propulsion system (1) of any of the claims 1-10, wherein one or more sealing elements are arranged around the harness(es) at the pivot j oint(s) and/or at the transom where the harness(es) is/are led through the transom, and/or at the transom bracket where the harness(es) is/are led through or into the transom bracket.

12. The propulsion system (1) of any of the claims 1-11, wherein the harness (7) is connecting at least one unit (10) arranged in the marine vessel with the drive unit.

13. The propulsion system (1) of claim 14, wherein the unit is a cooling medium tank, a power supply, an energy source, a fuel tank, a hydraulic fluid tank, a control unit, or any combination thereof.

14. The propulsion system (1) of any of the claims 1-13, wherein the drive unit (5) comprises an electric motor.

15. A marine vessel (2) comprising a transom (4) and a propulsion system (1) of any of the claims 1-14.
